# EUROPEAN PATENT SPECIFICATION

(11) **EP 4 513 644 B1**
(45) Date of publication and mention of the grant of the patent: **12.08.2026**
(21) Application number: 23820053.9
(22) Date of filing: 02.06.2023
(51) Int. Cl.: H01M 50/211, H01M 50/178, H01M 50/183, H01M 50/578, H01M 50/595

(54) **BATTERY MODULE AND MANUFACTURING METHOD THEREFOR**
BATTERIEMODUL UND HERSTELLUNGSVERFAHREN DAFÜR
MODULE DE BATTERIE ET SON PROCÉDÉ DE FABRICATION

(30) Priority: 08.06.2022 KR 20220069815; 10.05.2023 KR 20230060509
(43) Date of publication of application: 26.02.2025
(73) Proprietor: LG Energy Solution, Ltd., Seoul 07335 (KR)
(72) Inventor: LEE, Bum Hyun, Daejeon 34122 (KR); PARK, Jun Kyu, Daejeon 34122 (KR)
(74) Representative: Plasseraud IP
(86) International application number: PCT/KR2023/007601
(87) International publication number: WO 2023/239117

(56) References cited:
- CN-U- 214 043 891
- KR-A- 20130 012 105
- KR-A- 20140 099 701
- KR-A- 20160 014 916
- KR-A- 20160 014 916
- KR-A- 20210 015 807
- KR-A- 20210 094 924

## Description

### TECHNICAL FIELD

### CROSS-REFERENCE TO RELATED APPLICATION

The present application claims the benefit of the priority of Korean Patent Application Nos. 10-2022-0069815, filed on June 08, 2022, and 10-2023-0060509, filed on May 10, 2023.

### TECHNICAL FIELD

The present invention relates to a battery module configured by binding (coupling) flat surfaces of a plurality of pouch-type battery cells to be in contact with each other, and a method for manufacturing the same, and more particularly, to a battery module in which a sealing part is prevented or delayed from being torn at a portion from which an electrode lead protrudes, and a method for manufacturing the same.

### BACKGROUND ART

The demands for high-efficiency secondary batteries are rapidly increasing in the mobile device and electric vehicle fields. Among such the secondary batteries, a lithium secondary battery having high energy density, maintaining a relatively high voltage, and having a low self-discharge rate is commercially widely used, and research and development for improving performance is actively being conducted.

The secondary battery has a structure in which an electrode assembly and an electrolyte are embedded in a case such as a can or a pouch.

Among them, the pouch-type secondary battery is equipped with a stacked electrode assembly, and the stacked electrode assembly has a structure in which positive electrodes, separators, and negative electrodes are repeatedly stacked. Here, positive electrode tabs extending from the positive electrodes are gathered into one and bonded to a positive electrode lead, and negative electrode tabs extending from the negative electrodes are gathered into one and bonded to a negative electrode lead. In addition, ends of the positive lead and the negative lead protrude from the pouch to be electrically connected to the outside. The positive lead and the negative lead may be configured to protrude from the same side of the pouch, but in general, when the positive lead protrudes from one side, the negative lead protrudes from the other side of the pouch.

In addition, secondary batteries mounted in a vehicle, an energy storage system (ESS), and the like, the plurality of secondary batteries are coupled to increase in output and electricity storage so as to constitute modules, and then, the modules are coupled to constitute a pack. That is, the plurality of secondary batteries (battery cells) are gathered to manufacture battery modules, and the plurality of battery modules are gathered to manufacture a battery pack.

When the pouch-type secondary batteries are provided as battery cells included in the battery module, the pouch-type secondary batteries are stacked so that flat surfaces are in contact with each other and are provided in state in which an adhesive is applied to the contact surface through a tape or cable so as to be bound to each other.

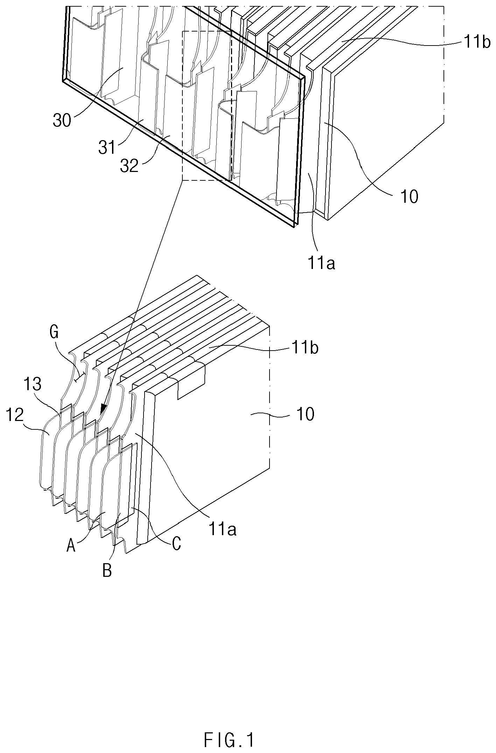

Referring to FIG. 1, which illustrates a configuration in which busbar plates and electrode leads (a positive electrode lead and a negative electrode lead) are connected to each other, and a configuration in which the busbar plates are separated, each of battery cells 10 has a structure in which an electrode assembly is mounted in a pouch, one (one of the positive electrode lead and the negative electrode lead) of the electrode leads 12 extending from the electrode assembly protrudes from one side of the pouch, and the other (the other of the positive electrode lead and the negative electrode lead) protrudes from an opposite side of the pouch.

The electrode lead 12 protrudes from a sealing part 11 at an edge of the pouch and is mounted in the pouch in a state in which an insulating tape 13 is attached to secure electrical insulation, and an end of the insulating tape 13 protrudes from the sealing part 11 of the pouch so as to be exposed by a predetermined length.

When heat is generated during charging and discharging of the battery cell (or when heat is generated for another reason), a built-in electrolyte is vaporized, and thus, a pressure inside the pouch increases.

In addition, when an amount of vaporization increases, and the pressure inside the pouch exceeds a critical point, venting occurs in the sealing part 11 (a gas generated inside the pouch is ejected to the outside).

Particularly, a portion of the sealing part 11 from which the electrode lead protrudes (a side of sides formed along the edge of the pouch at which the electrode lead is disposed) has relatively weak coupling force compared to other places, and thus, there is high possibility of the venting, and a size of the sealing part 11, which is spread, increases to further increase in possibility of the venting.

That is, in the sealing part 11 of the pouch, an area 11a of the sealing part on which the electrode lead 12 is disposed has higher possibility of the venting than an area 11b of the sealing part on which the electrode lead 12 is disposed. In addition, based on the electrode lead 12, a 'portion B disposed inside the sealing part 11a by being surrounded by the insulating tape 12' may be a portion at which the sealing force is lowered compared to an 'exposed portion A' and a 'portion C disposed inside the sealing part 11a'. Particularly, a space (G) having a predetermined size is formed between the adjacent battery cells 10, but there is a problem in that this portion is not separately supported.

In addition, when the venting occurs toward the protruding portion A of the electrode lead 12, since the busbar plate 30 through which electricity flows is directly affected, there is possibility of occurrence of short circuit between terminal parts 31 and 32 connected to the electrode leads 12. CN 214 043 891 U discloses some of the features of independent claim 1 and 6.

### DISCLOSURE OF THE INVENTION

### TECHNICAL PROBLEM

Accordingly, in order to solve the above problem, an object of the present invention is to provide a battery module in which, even though venting occurs, a time point at which the venting occurs is delayed as much as possible to avoid a direction in which an electrode lead 12 protrudes, and a method for manufacturing the same.

### TECHNICAL SOLUTION

A battery module, in which a plurality of battery cells, each of which has a structure, in which an electrode assembly is mounted in a pouch, and in which an electrode lead extending from the electrode assembly protrudes from a portion of a sealing part disposed along an edge of the pouch, are connected to each other so that flat surfaces of the battery cells are in contact with each other, according to the present invention for achieving the above object includes: a fixing part disposed in space G between the sealing parts of the adjacent battery cells to support the sealing part so that the sealing part is maintained in its original shape, wherein the fixing part is disposed to be coupled on an area of the sealing part of the pouch, from which the electrode lead protrudes. Here, the meaning that the electrode lead is disposed to be coupled on the protruding area does not mean that the fixing part is disposed at the portion at which the electrode lead 12 protrudes, but mean an area in the vicinity of the electrode lead in the protruding direction on various areas 11a and 11b of the sealing part, i.e., the area 11a of the sealing part including a side of the pouch, on which the electrode lead is disposed.

The fixing part is solidified (cured) after being sprayed in a form of foam between the sealing parts of the adjacent battery cells in a state in which the plurality of battery cells are connected to each other.

The fixing part may be made of polyurethane foamed in the form of the foam or may be made to contain at least a portion of the polyurethane.

The electrode lead may protrude from the sealing part in a state of being coupled to an insulating tape, wherein the insulating tape may protrude with a shorter length than the electrode lead, and the fixing part may be disposed so as not to cover the insulating tape.

The fixing part may have electrical insulation properties.

Furthermore, the prevent invention further provide a method for manufacturing a battery module to manufacture the battery module having the above-described configuration.

A method for manufacturing a battery module provided in the present invention includes: a battery cell stacking process of stacking a plurality of battery cells, each of which has a structure, in which an electrode assembly is mounted in a pouch, and in which an electrode lead extending from the electrode assembly protrudes from a portion of a sealing part disposed along an edge of the pouch; and a fixing part spraying process of spraying a fixing part in the form of form between the sealing parts of the adjacent battery cells, wherein the fixing part sprayed between the sealing parts of the adjacent battery cells is solidified to support the sealing part so that the sealing part is maintained in its original shape. In addition, the fixing part sprayed between the sealing parts of the adjacent battery cells may be solidified (cured) to support the sealing part so that the sealing part is maintained in its original shape.

The method may further include, after the fixing part spraying process, a leaving process of leaving the fixing part for a predetermined time so that the fixing part is solidified into a solid state from the form of the foam.

The electrode lead may protrude from the sealing part in a state of being coupled to an insulating tape, wherein the insulating tape may protrude with a shorter length than the electrode lead, and in the fixing part spraying process, the fixing part may be disposed so as not to cover the insulating tape.

In the fixing part spraying process, the same amount of fixing part may be sprayed between the sealing parts of the adjacent battery cells.

The fixing part may have electrical insulation properties after being solidified.

### ADVANTAGEOUS EFFECTS

In the present invention having the above configuration, the fixing part sprayed in the form of foam is filled into the space G formed between the sealing parts of the adjacent battery cells and is solidified in place, and even if swelling of the battery cell occurs, the possibility of the venting may be reduced, and even if the venting occurs, the time point at which the venting occurs may be delayed as much as possible.

In addition, even if the venting occurs, the occurrence of the venting on the area of the sealing part from which the electrode lead protrudes may be avoided.

Since the fixing part is sprayed in the form of the foam, the thickness and formation position of the fixing part may be easily adjusted by adjusting the spraying amount and the spraying position.

Since the fixing part is manufactured to have the electrical insulation, the possibility of occurrence of the short circuit may be further reduced.

### BRIEF DESCRIPTION OF THE DRAWINGS

FIG. 1 is a view illustrating a configuration in which a busbar plate is connected to an electrode lead in a state in which battery cells are bound to each other and a configuration in which the busbar plate is separated.
FIG. 2 is a view illustrating a configuration in which a fixing part is disposed on an area 11a of a sealing part, from which the electrode lead protrudes, on various areas 11a and 11b of the sealing part according to the present invention.
FIG. 3 is a view illustrating a configuration in which foam is sprayed between sealing parts of battery cells adjacent to each other.
FIG. 4 is a view illustrating a state in which the foam is solidified (right view) after the foam is sprayed (left view).

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a battery module which is capable of lowering possibility of venting, delaying a time point, at which the venting occurs, as much as possible even if the venting occurs, and avoiding an area 11a of the sealing part 11, from which an electrode lead 12 protrudes, and a method for manufacturing the same. Hereinafter, embodiments provided through the present invention will be described in more detail with reference to the accompanying drawings.

### First embodiment

The present invention provides a method for manufacturing a battery module capable of lowering possibility of venting or delaying the venting as a first embodiment.

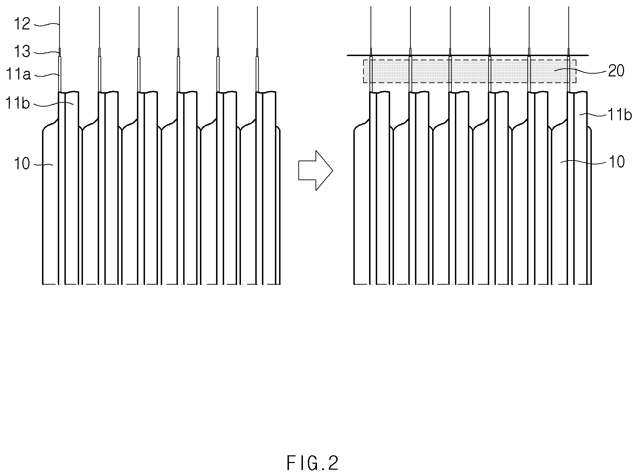

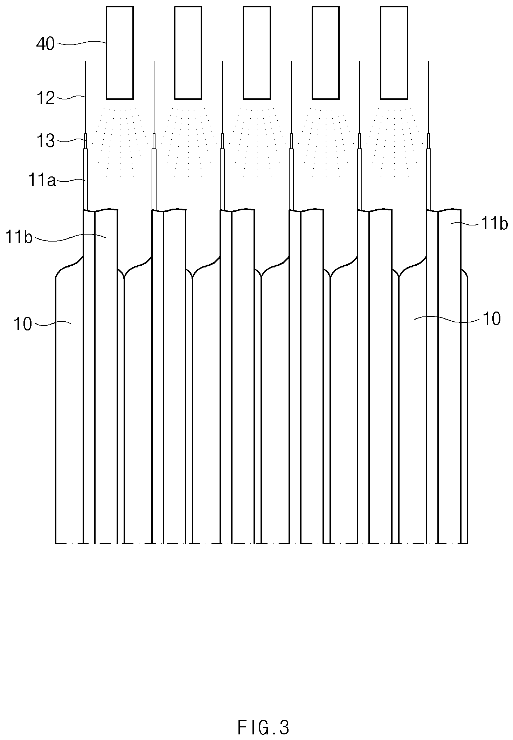

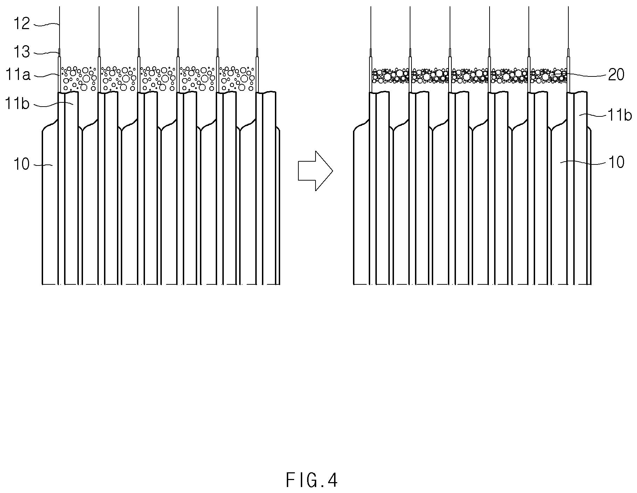

FIG. 2 is a view illustrating a configuration in which a fixing part is disposed on an area 11a of a sealing part, from which the electrode lead protrudes, on various areas 11a and 11b of the sealing part according to the present invention, FIG. 3 is a view illustrating a configuration in which foam is sprayed between sealing parts of battery cells adjacent to each other, and FIG. 4 is a view illustrating a state in which the foam is solidified (right view) after the foam is sprayed (left view).

Referring to the drawings, the method for manufacturing the battery module provided in this embodiment includes a battery cell stacking process and a fixing part spraying process.

The battery cell stacking process is performed by stacking a plurality of battery cells 10, and each of the battery cells 10 is connected to each other through a tape, a cable, an adhesive, or the like. In this embodiment, each battery cell is provided as a pouch-type secondary battery.

That is, each of the battery cells 10 has a structure in which an electrode assembly and an electrolyte are mounted in a pouch, and the electrode lead 12 extending from the electrode assembly protrudes from a portion of the area 11a of the sealing part 11 along an edge of the pouch.

Here, the electrode lead 12 is mounted in the pouch in a state in which an insulating tape 13 is attached thereto, and sealing of the pouch is performed in a state in which an end of one side of the electrode 12 protrudes to form the sealing part 11. Here, the sealing is performed so that a portion of the insulating tape 12 is exposed in the sealing part 11.

In addition, the battery cells 10 are aligned so that the electrode leads 12 constantly protrude and then are stacked to be in surface contact with each other and connected to block movement.

Therefore, each of the battery cells 10 is connected in a state in which a plurality of flat surfaces are stacked to be in contact with each other, and terrace parts of the battery cells 10 (upper end of the corresponding sealing part on the sealing part on the area, from which the electrode lead protrudes with reference to FIG. 2) are aligned.

Then, the fixing part spraying process of spraying the foam-shaped fixing part 20 between the sealing parts 11a of the adjacent battery cells 10 (below the terrace part based on FIG. 2) so as not to pass over the terrace part is performed.

Here, even if a portion of the foam forming the fixing part 20 is sprayed onto the insulating tape 13 onto the terrace part, the foam that is solidified as the fixing part 20 is sprayed onto the insulating tape 12 so as not to be applied to the electrode lead 12 on the insulating tape 13.

Even if the foam is solidified, since the foam has electrical insulation properties, there is little or no risk of causing the short circuit. However, since there are possibility of deteriorating flexibility of the electrode lead and increasing in electrical resistance while current flows through the fixing part 20 solidified on the electrode lead (when vibration is applied to the battery pack), it is preferable that the foam is sprayed to avoid the electrode lead 12.

That is, as illustrated in FIG. 3, the foam forming the fixing part 20 is applied in a state in which a coating device 40 enters between the adjacent electrode leads 12 by a predetermined depth.

As in the dictionary meaning of the foam having bubbles, the foam is applied as a liquid in a state of containing gas particles surrounded by a thin film, and as illustrated in FIG. 4, after a portion of the foam is liquefied and evaporated in the gaseous and liquid state, the foam is solidified in a state in which a volume of the foam is reduced by a predetermined volume to fix the adjacent sealing parts 11a to each other.

Thus, each of the sealing parts 11, more particularly, the area 11a of the sealing part, from which the electrode leads 12 protrude, are supported to be maintained in its original shape.

In this embodiment, after the application of the foam, a process of leaving the foam for a predetermined time to be solidified so as to form the fixing part 20 may be further performed. Here, the leaving time may be determined according to a temperature, composition, and concentration of the foam when the foam is applied.

Therefore, the electrode lead 12 is coupled to the insulating tape 13 to protrude from the sealing part 11. Here, in a state in which the insulating tape 13 protrudes with a shorter length than the electrode lead 12, when the top 20 is sprayed in the form of the foam, it is preferable to be sprayed so as not to cover the insulating tape 13.

As illustrated in FIG. 4 , the same amount of fixing part 20 may be sprayed between the sealing parts 11 of the adjacent battery cells 10 in the fixing part spraying process. However, if it is necessary to more firmly support a load and impact at a specific position in the battery module, the spraying amount of fixing part 20 may be adjusted according to a design. For example, a more amount of fixing part 20 may be sprayed between the battery cell 10 of the adjacent battery cell 10 that is disposed at the outermost side than anywhere else, and thus, the corresponding portion may have larger robustness than other positions to more efficiently buffer an external impact.

In addition, the fixing part 20 is preferably provided as polyurethane that is foamed in the form of the foam and has electrical insulation after being solidified.

### Second embodiment

In the present invention, a battery module that is capable of being manufactured through the manufacturing method provided in the first embodiment is provided as a second embodiment.

As described above, in the battery module provided in this embodiment, a plurality of battery cells, each of which has a structure, in which an electrode assembly is mounted in a pouch, and in which an electrode lead 12 extending from the electrode assembly protrudes from a sealing part 11 (a partial area 11a of the sealing part 11) disposed along an edge of the pouch, are connected to each other so that flat surfaces of the battery cells are in contact with each other.

In addition, a fixing part 20 is provided, and the fixing part 20 is disposed between the sealing parts 11a of the adjacent battery cells to support the sealing part 11a so that the sealing part 11a is maintained in its original shape.

The fixing part 20 is disposed to be coupled on the area 11a of the sealing part 11 of the pouch, from which the electrode lead protrudes. Here, the meaning that the electrode lead 12 is disposed to be coupled on the protruding area 11a does not mean that the fixing part 20 is disposed at a point at which the electrode lead 12 protrudes, but mean an area 11a including a portion of various areas 11a and 11b of the sealing part 11, from which the electrode lead 12 protrudes.

The fixing part 20 is solidified after being sprayed in the form of foam between the sealing parts 11 of the adjacent battery cells 10 in a state in which the plurality of battery cells 10 are connected to each other. The fixing part 20 may be made of polyurethane foamed in the foam state or may be made to contain the polyurethane.

Specifically, the fixing part 20 may include polyurethane and an additive added to the polyurethane. Here, the additive may be a material that serves to further increase in hardness of polyurethane. At least one or more of calcium carbonate or silica may be used as the additive.

The electrode lead 12 protrudes from the sealing part 11a in a state of being coupled to an insulating tape 13. Here, the insulating tape 13 protrudes with a shorter length than the electrode lead 12, and the fixing part 20 is foamed so as not to cover the insulating tape 13. The fixing part 20 is manufactured to have electrical insulation properties.

In the present invention having the above configuration, the fixing part 20 sprayed in the form of the foam may be solidified between the sealing parts 11a of the adjacent battery cells 10 to reduce possibility of venting even if swelling of the battery cell occurs, and also, even if the venting occurs, a time point, at which the venting occurs, may be delayed as much as possible. In addition, even if the venting occurs, it is possible to avoid the venting from occurring at the protruding portion of the electrode lead 12.

Since the fixing part 20 is sprayed in the form of the foam, a thickness and formation position of the fixing part may be easily adjusted by adjusting a spraying amount and a spraying position.

Since the fixing part 20 is manufactured to have electrical insulation, possibility of occurrence of short circuit may be further reduced.

### [Description of the Symbols]

10: Battery cell
11: Sealing part
11a: Area including portion of sealing part from which electrode lead protrudes
11b: Remaining area except for area including portion of sealing part from which electrode lead protrudes
12: Electrode lead
13: Insulating tape
20: Fixing part
30: Busbar plate
40: Coating device
G: Space

## Claims

1. A battery module, in which a plurality of battery cells (10), each of which has a structure, in which an electrode assembly is mounted in a pouch, and in which an electrode lead (12) extending from the electrode assembly protrudes from a portion of a sealing part disposed along an edge of the pouch, are connected to each other so that flat surfaces of the battery cells (10) are in contact with each other, the battery module comprising:
a fixing part (20) disposed between the sealing parts of the adjacent battery cells (10) to support the sealing part so that the sealing part is maintained in its original shape,
wherein the fixing part (20) is disposed to be coupled on an area of the sealing part of the pouch, from which the electrode lead (12) protrudes, **characterized in that** the fixing part (20) is solidified after being sprayed in a form of foam between the sealing parts of the adjacent battery cells (10) in a state in which the plurality of battery cells (10) are connected to each other.

2. The battery module of claim 1, wherein the fixing part (20) comprises polyurethane foamed in a foam state.

3. The battery module of claim 2, wherein the fixing part (20) comprises at least one or more of calcium carbonate or silica as an additive for improving hardness of polyurethane.

4. The battery module of claim 1, wherein the electrode lead (12) protrudes from the sealing part in a state of being coupled to an insulating tape (13),
wherein the insulating tape (13) protrudes with a shorter length than the electrode lead (12), and the fixing part (20) is disposed so as not to cover the insulating tape (13).

5. The battery module of any one of claims 1 to 3, wherein the fixing part (20) has electrical insulation properties.

6. A method for manufacturing a battery module, the method comprising:
a battery cell (10) stacking process of stacking a plurality of battery cells (10), each of which has a structure, in which an electrode assembly is mounted in a pouch, and in which an electrode lead (12) extending from the electrode assembly protrudes from a portion of a sealing part disposed along an edge of the pouch; and
a fixing part spraying process of spraying a fixing part (20) in the form of foam between the sealing parts of the adjacent battery cells (10),
wherein the fixing part (20) sprayed between the sealing parts of the adjacent battery cells (10) is solidified to support the sealing part so that the sealing part is maintained in its original shape.

7. The method of claim 6, further comprising, after the fixing part spraying process, a leaving process of leaving the fixing part (20) for a predetermined time so that the fixing part (20) is solidified into a solid state from the form of the foam.

8. The method of claim 6, wherein the electrode lead protrudes from the sealing part (20) in a state of being coupled to an insulating tape (13),
wherein the insulating tape (13) protrudes with a shorter length than the electrode lead (12), and
in the fixing part spraying process, the fixing part (20) is disposed so as not to cover the insulating tape (13).

9. The method of any one of claims 6 to 8, wherein, in the fixing part spraying process, the same amount of fixing part (20) is sprayed between the sealing parts of the adjacent battery cells (10).

10. The method of any one of claims 6 to 8, wherein the fixing part (20) has electrical insulation properties after being solidified.

## Patentansprüche

1. Batteriemodul, in dem eine Vielzahl von Batteriezellen (10), von denen jede eine Struktur aufweist, in der eine Elektrodenanordnung in einem Pouch montiert ist, und in der ein Elektrodenableiter (12), der sich von der Elektrodenanordnung erstreckt, aus einem Abschnitt eines Dichtungsteils vorsteht, der entlang eines Rands des Pouches angeordnet ist, miteinander verbunden sind, sodass flache Oberflächen der Batteriezellen (10) in Kontakt miteinander stehen, wobei das Batteriemodul umfasst:
ein Befestigungsteil (20), das zwischen den Dichtungsteilen der benachbarten Batteriezellen (10) angeordnet ist, um den Dichtungsteil zu stützen, sodass der Dichtungsteil in seiner ursprünglichen Form gehalten wird,
wobei das Befestigungsteil (20) angeordnet ist, um an einen Bereich des Dichtungsteils des Pouches gekoppelt zu werden, aus dem der Elektrodenableiter (12) vorsteht,
**dadurch gekennzeichnet, dass**
das Befestigungsteil (20) verfestigt wird, nachdem es in Schaumform zwischen die Dichtungsteile der benachbarten Batteriezellen (10) gesprüht wurde, in einem Zustand, in dem die Vielzahl von Batteriezellen (10) miteinander verbunden sind.

2. Batteriemodul nach Anspruch 1, wobei das Befestigungsteil (20) Polyurethan umfasst, das in einem Schaumzustand geschäumt ist.

3. Batteriemodul nach Anspruch 2, wobei das Befestigungsteil (20) mindestens eines oder mehrere von Calciumcarbonat oder Siliciumdioxid als Additiv zur Verbesserung der Härte von Polyurethan umfasst.

4. Batteriemodul nach Anspruch 1, wobei der Elektrodenableiter (12) aus dem Dichtungsteil in einem Zustand vorsteht, in dem er mit einem Isolierband (13) gekoppelt ist,
wobei das Isolierband (13) mit einer kürzeren Länge als der Elektrodenableiter (12) vorsteht, und das Befestigungsteil (20) so angeordnet ist, dass es das Isolierband (13) nicht bedeckt.

5. Batteriemodul nach einem der Ansprüche 1 bis 3, wobei das Befestigungsteil (20) elektrische Isolationseigenschaften aufweist.

6. Verfahren zur Herstellung eines Batteriemoduls, wobei das Verfahren umfasst:
einen Batteriezellen-Stapelprozess des Stapelns einer Vielzahl von Batteriezellen (10), von denen jede eine Struktur aufweist, in der eine Elektrodenanordnung in einem Pouch montiert ist, und in der ein Elektrodenableiter (12), der sich von der Elektrodenanordnung erstreckt, aus einem Abschnitt eines Dichtungsteils vorsteht, der entlang eines Rands des Pouches angeordnet ist; und
einen Befestigungsteil-Sprühprozess des Sprühens eines Befestigungsteils (20) in Schaumform zwischen die Dichtungsteile der benachbarten Batteriezellen (10),
wobei das Befestigungsteil (20), das zwischen die Dichtungsteile der benachbarten Batteriezellen (10) gesprüht wird, verfestigt wird, um den Dichtungsteil zu stützen, sodass der Dichtungsteil in seiner ursprünglichen Form gehalten wird.

7. Verfahren nach Anspruch 6, ferner umfassend, nach dem Befestigungsteil-Sprühprozess, einen Belassungsprozess des Belassens des Befestigungsteils (20) für eine vorbestimmte Zeit, sodass das Befestigungsteil (20) aus der Schaumform in einen festen Zustand verfestigt wird.

8. Verfahren nach Anspruch 6, wobei der Elektrodenableiter aus dem Dichtungsteil in einem Zustand vorsteht, in dem er mit einem Isolierband (13) gekoppelt ist,
wobei das Isolierband (13) mit einer kürzeren Länge als der Elektrodenableiter (12) vorsteht, und
in dem Befestigungsteil-Sprühprozess das Befestigungsteil (20) so angeordnet ist, dass es das Isolierband (13) nicht bedeckt.

9. Verfahren nach einem der Ansprüche 6 bis 8, wobei in dem Befestigungsteil-Sprühprozess die gleiche Menge des Befestigungsteils (20) zwischen die Dichtungsteile der benachbarten Batteriezellen (10) gesprüht wird.

10. Verfahren nach einem der Ansprüche 6 bis 8, wobei das Befestigungsteil (20) nach dem Verfestigen elektrische Isolationseigenschaften aufweist.

## Revendications

1. Module de batterie, dans lequel une pluralité de cellules de batterie (10), dont chacune a une structure, dans laquelle un ensemble d'électrodes est monté dans un sachet, et dans laquelle une sortie d'électrode (12) s'étendant depuis l'ensemble d'électrodes fait saillie d'une portion d'une partie de scellement disposée le long d'un bord du sachet, sont connectées les unes aux autres de sorte que des surfaces plates des cellules de batterie (10) sont en contact les unes avec les autres, le module de batterie comprenant :
une pièce de fixation (20) disposée entre les parties de scellement des cellules de batterie adjacentes (10) pour supporter la partie de scellement de sorte que la partie de scellement est maintenue dans sa forme d'origine,
dans lequel la pièce de fixation (20) est disposée pour être couplée sur une zone de la partie de scellement du sachet, depuis laquelle la sortie d'électrode (12) fait saillie,
**caractérisé en ce que**
la pièce de fixation (20) est solidifiée après avoir été pulvérisée sous une forme de mousse entre les parties de scellement des cellules de batterie adjacentes (10) dans un état dans lequel la pluralité de cellules de batterie (10) sont connectées les unes aux autres.

2. Module de batterie selon la revendication 1, dans lequel la pièce de fixation (20) comprend du polyuréthane expansé à l'état de mousse.

3. Module de batterie selon la revendication 2, dans lequel la pièce de fixation (20) comprend au moins un ou plusieurs parmi le carbonate de calcium ou la silice en tant qu'additif pour améliorer la dureté du polyuréthane.

4. Module de batterie selon la revendication 1, dans lequel la sortie d'électrode (12) fait saillie de la partie de scellement dans un état où elle est couplée à un ruban isolant (13), dans lequel le ruban isolant (13) fait saillie avec une longueur plus courte que la sortie d'électrode (12), et la pièce de fixation (20) est disposée de manière à ne pas recouvrir le ruban isolant (13).

5. Module de batterie selon l'une quelconque des revendications 1 à 3, dans lequel la pièce de fixation (20) a des propriétés d'isolation électrique.

6. Procédé de fabrication d'un module de batterie, le procédé comprenant :
un procédé d'empilement de cellules de batterie (10) consistant à empiler une pluralité de cellules de batterie (10), dont chacune a une structure, dans laquelle un ensemble d'électrodes est monté dans un sachet, et dans laquelle une sortie d'électrode (12) s'étendant depuis l'ensemble d'électrodes fait saillie d'une portion d'une partie de scellement disposée le long d'un bord du sachet ; et
un procédé de pulvérisation de pièce de fixation consistant à pulvériser une pièce de fixation (20) sous la forme de mousse entre les parties de scellement des cellules de batterie adjacentes (10),
dans lequel la pièce de fixation (20) pulvérisée entre les parties de scellement des cellules de batterie adjacentes (10) est solidifiée pour supporter la partie de scellement de sorte que la partie de scellement est maintenue dans sa forme d'origine.

7. Procédé selon la revendication 6, comprenant en outre, après le procédé de pulvérisation de la pièce de fixation, un procédé de repos consistant à laisser la pièce de fixation (20) pendant une durée prédéterminée de sorte que la pièce de fixation (20) se solidifie en un état solide à partir de la forme de la mousse.

8. Procédé selon la revendication 6, dans lequel la sortie d'électrode fait saillie de la partie de scellement (20) dans un état où elle est couplée à un ruban isolant (13),
dans lequel le ruban isolant (13) fait saillie avec une longueur plus courte que la sortie d'électrode (12), et
dans le procédé de pulvérisation de la pièce de fixation, la pièce de fixation (20) est disposée de manière à ne pas recouvrir le ruban isolant (13).

9. Procédé selon l'une quelconque des revendications 6 à 8, dans lequel, dans le procédé de pulvérisation de la pièce de fixation, la même quantité de pièce de fixation (20) est pulvérisée entre les parties de scellement des cellules de batterie adjacentes (10).

10. Procédé selon l'une quelconque des revendications 6 à 8, dans lequel la pièce de fixation (20) a des propriétés d'isolation électrique après avoir été solidifiée.
